# EUROPÄISCHE PATENTSCHRIFT

(11) **EP 2 424 640 B1**
(45) Veröffentlichungstag und Bekanntmachung des Hinweises auf die Patenterteilung: **24.01.2018**
(21) Anmeldenummer: 10715119.3
(22) Anmeldetag: 23.04.2010
(51) Int. Cl.: B01D 36/00, F02M 37/22, C02F 1/72

(54) **KRAFTSTOFFFILTERSYSTEM MIT VORRICHTUNG ZUM REINIGEN VON WASSER**
FUEL FILTER SYSTEM WITH DEVICE FOR PURIFYING WATER
SYSTEME DE FILTRE A CARBURANT AVEC DISPOSITIF DE PURIFICATION D'EAU

(30) Priorität: 02.05.2009 DE 102009019800
(43) Veröffentlichungstag der Anmeldung: 07.03.2012
(73) Patentinhaber: Hydac Filtertechnik GmbH, 66280 Sulzbach/Saar (DE)
(72) Erfinder: EBERLE, Richard, 66399 Ormesheim (DE); KREIBIG, Micha, 66780 Rehlingen-Siersburg (DE); DEWES, Markus, 66649 Oberthal (DE)
(74) Vertreter: Bartels, Martin Erich Arthur
(86) Internationale Anmeldenummer: PCT/EP2010/002502
(87) Internationale Veröffentlichungsnummer: WO 2010/127774

(56) Entgegenhaltungen:
- WO-A1-2004/065780
- WO-A1-2009/135489
- DE-A1-102004 029 874
- US-A1- 2009 001 027
- I Tröster ET AL: "Electrochemical advanced oxidation process using DiaChem electrodes", Water science and technology : a journal of the International Association on Water Pollution Research, 1 January 2004 (2004-01-01), page 207, XP055325379, England Retrieved from the Internet: URL:http://wst.iwaponline.com/content/49/4 /207.full.pdf

## Beschreibung

Die Erfindung betrifft ein Kraftstoffsystem mit einem Kraftstofffilter.

Um die Betriebssicherheit von mit flüssigen Kraftstoffen zu versorgenden Antriebseinheiten, wie insbesondere Verbrennungsmotoren, sicherzustellen ist es üblich, im Kraftstoffversorgungssystem wasserabscheidende Kraftstofffilter vorzusehen. Die Abscheidung von in Dieselkraftstoff enthaltenem oder mitgeführtem Wasser ist insbesondere geboten, um das empfindliche Einspritzsystem vor Beschädigung zu schützen. Das in solchen Systemen abgeschiedene Wasser ist mit verschiedenen organischen Inhaltsstoffen belastet, etwa mit Ölschwebetröpfchen aus dem den Kraftstofffilter durchströmenden Dieselkraftstoff. Somit verbietet es sich aus Gründen des Umweltschutzes das aus Kraftstofffiltersystemen abgeschiedene Wasser ohne weitere Behandlung in die Umgebung abzugeben. Die WO 2004/065780 A1 beschreibt ein Kraftstofffiltersystem bei dem eine Pervaporationsmembrane zum Abführen des Wassers aus dem Kraftstofffilter verwendet wird.

Die DE 10 2004 029 874 A1 beschreibt ein Verfahren zur Verminderung des Gehaltes von schwerflüchtigen lipophilen Stoffen in Abwasser, insbesondere von Speisefetten und Speiseölen. Hierbei werden die lipophilen Stoffe wenigstens teilweise abgebaut, wobei eine Elektrolyse des Abwassers ebenso vorgesehen sein kann, wie die Bestrahlung des Abwassers mit UV-Licht.

Die US 2009/0001027 A1 beschreibt eine Filtervorrichtung, bei der ein zylindrisch geformtes Filterelement zentral angeordnet ist, mit einer Behandlungskammer für Fluid, die sich unter dem Filterelement befindet und einer ersten Einrichtung zur Bildung einer aufwärts durch das Filterelement gerichteten Fluidströmung, und mit einer zweiten Einrichtung zur Bildung einer Fluidströmung mit höherer Geschwindigkeit zur kreisförmigen Leitung von Fluid um das Filterelement in eine Filtratkammer und zu einem Fluidauslass der Filtervorrichtung hin.

Der Fachartikel von Tröster, I.; Schäfer, L.; Fryda, M.; Matthée, T.: Electrochemical advanced oxidation process using DiaChem® electrodes. In: Water Science and Technology, Bd. 94 (2004), Nr. 4, S. 207-212, http://wst.iwaponline.com/content/49/4/207.full.pdf, lehrt, Diamantelektroden mit Polumkehr zu bestromen.

Die bekannten Vorrichtungen lassen noch Wünsche in Bezug auf einen einfachen Aufbau und ihre Standzeit offen.

Im Hinblick auf diese Problematik stellt sich die Erfindung die Aufgabe, ein Kraftstoffsystem zur Verfügung zu stellen, das, obgleich es einfach und wirtschaftlich betreibbar ist, eine wirksame Entfernung der organischen Belastungen ermöglicht, so dass das abgereinigte Wasser unbedenklich an die Umgebung abgegeben werden kann.

Erfindungsgemäß ist diese Aufgabe durch ein Kraftstoffsystem gelöst, das die Merkmale des Patentanspruches 1 in seiner Gesamtheit aufweist.

Gemäß dem Kennzeichen von Anspruch 1 ist vorgesehen, dass das Kraftstoffsystem eine Vorrichtung zum Reinigen von Wasser, das dem Kraftstofffilter abgelassen oder aufgefangen ist und das mit organischen Inhaltsstoffen verunreinigt ist, aufweist, dass mittels einer Auftrenneinrichtung aus dem Wasser Hydroxylradikale gebildet sind, die die Verunreinigungen, insbesondere organischen Inhaltsstoffe, weitestgehend aufoxidieren und in Verbindungen, wie CO₂, umwandeln, dass die Auftrenneinrichtung eine Elektrolysiereinrichtung zwei Diamantelektroden aufweist, die, mit Polumkehr bestromt, abwechselnd als Anode und Kathode wirksam sind, und dass die Vorrichtung einen dem betreffenden Kraftstofffilter nachgeschalteten Behandlungsraum für das zu reinigende Wasser aufweist, der einen steuerbaren Auslass, eine Fördervorrichtung oder einen Überlauf für das gereinigte Wasser sowie die Auftrenneinrichtung aufweist, um das im Behandlungsraum befindliche Wasser mit den gebildeten Hydroxylradikalen zu kontaktieren.

Demgemäß besteht die wesentliche Besonderheit der Erfindung darin, dass die Vorrichtung eine Auftrenneinrichtung aufweist, mittels deren aus dem abzureinigenden Wasser Hydroxylradikale abspaltbar sind, die die organischen Inhaltsstoffe weitestgehend zu anorganischen Verbindungen, wie CO₂, oxidieren. Da Hydroxylradikale chemisch hochreaktiv sind, sind sie in der Lage, ein derart hohes Oxidationspotential zu entfalten, dass organische Belastungsstoffe, wie etwa Öl-Wasser-Emulsionen oder Dieselschwebetröpfchen bei aus Diesel-Kraftstofffiltern abgeschiedenem Wasser praktisch vollständig zu CO₂ oxidiert werden.

Während bei der Elektrolyse üblicherweise Wasser in Wasserstoff und Sauerstoff gespalten wird, liefert die Diamantelektrode einen Arbeitsbereich, in dem anstelle von Sauerstoff und Wasserstoff hochreaktive Hydroxylradikale gebildet werden.

Bei besonders vorteilhaften Ausführungsbeispielen weist die Auftrenneinrichtung Hydroxylradikale bildende Medien, beispielsweise Katalysatoren wie Titandioxid, auf.

Mittels einer Diamantelektrode, die durch eine Dotierung mit dem Element Bor elektrisch leitfähig ist, ist eine spezielle Wasserzersetzung erreichbar.

Bei besonders vorteilhaften Ausführungsbeispielen ist weiterhin vorgesehen, dass die Auftrenneinrichtung, vorzugsweise zusätzlich zu dem im Behandlungsraum befindlichen, Hydroxylradikale erzeugenden Einrichtungsteil, im zugeordneten Kraftstofffilter ein mit Titandioxid versehenes Filtermedium zur Bildung von Hydroxylradikalen aufweist.

Zur Begünstigung der Bildung der Hydroxylradikale durch Titandioxid kann die Auftrenneinrichtung ein Mittel zur Zufuhr von Strahlungsenergie aufweisen. Hierfür kann eine künstliche oder natürliche Lichtquelle, vorzugsweise mit Wellenlängen von 180 bis 300 nm, vorgesehen sein.

Eine derartige Strahlungsquelle kann, je nach dem, wo die Bildung der Hydroxylradikale mittels Titandioxid erfolgt, zur Bestrahlung des Behandlungsraumes und/oder des Innenraumes des Kraftstofffilters vorgesehen sein.

Nachstehend ist die Erfindung anhand von in der Zeichnung dargestellten Ausführungsbeispielen im Einzelnen erläutert. Es zeigen:
- Fig. 1: eine lediglich diagrammartig dargestellte Funktionsskizze eines Ausführungsbeispieles der erfindungsgemäßen Vorrichtung; und
- Fig. 2: eine der Fig. 1 entsprechende Darstellung eines zweiten Ausführungsbeispieles der Vorrichtung

Nachstehend ist die Erfindung anhand von Beispielen erläutert, bei denen die Reinigungsvorrichtung 2 in ein Kraftstoffversorgungssystem so integriert ist, dass aus einem wasserabscheidenden Kraftstofffilter 4 abgeschiedenes Wasser 6 unmittelbar in einen einen Behandlungsraum bildenden Behälter 8 der Vorrichtung 2 abgelassen wird. Es versteht sich, dass die Reinigungsvorrichtung 2 auch eine von einem Kraftstoffversorgungssystem separierte Einheit bilden kann, in der aufgefangenes Wasser gereinigt wird.

Bei den hier beschriebenen Beispielen ist der Kraftstofffilter 4 im Verlauf der Kraftstoffleitung 10 angeordnet und wird vom Kraftstoff, beispielsweise Dieselöl, durchströmt, bevor dieses einer zu versorgenden Anlage (nicht gezeigt) zugeführt wird, beispielsweise der Einspritzpumpe eines Dieselmotors. Das im Filter 4 abgeschiedene Wasser 6 wird unmittelbar in den Behälter 8 der Vorrichtung 2 abgelassen. Der Behälter 8 bildet einen Behandlungsraum für abgelassenes Wasser 9 mit steuerbarem Ablass 12 und steuerbarem Auslass 14, mittels deren mit Hilfe von in der Technik üblichen Niveausensoreinrichtungen eine Füllmenge von zu reinigendem Wasser 9 für einen vorgegebenen Behandlungszeitraum jeweils angesammelt gehalten und nach erfolgter Reinigung abgegeben wird.

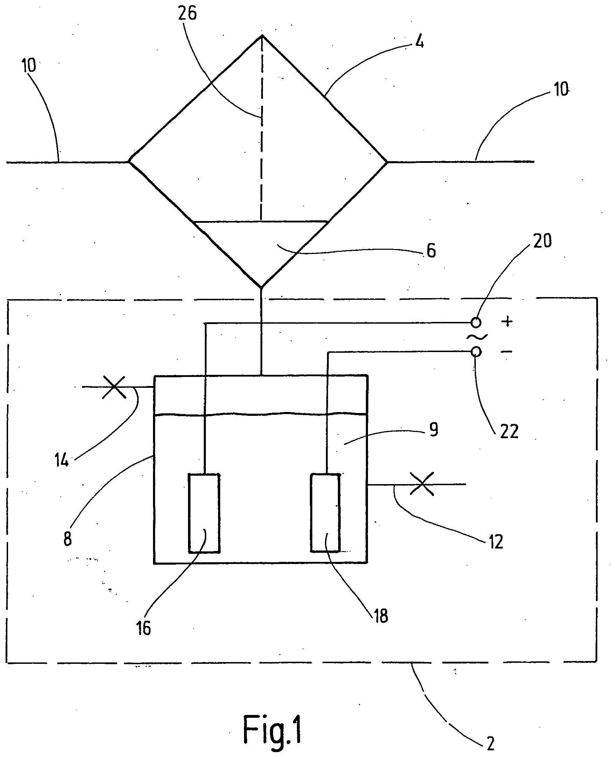

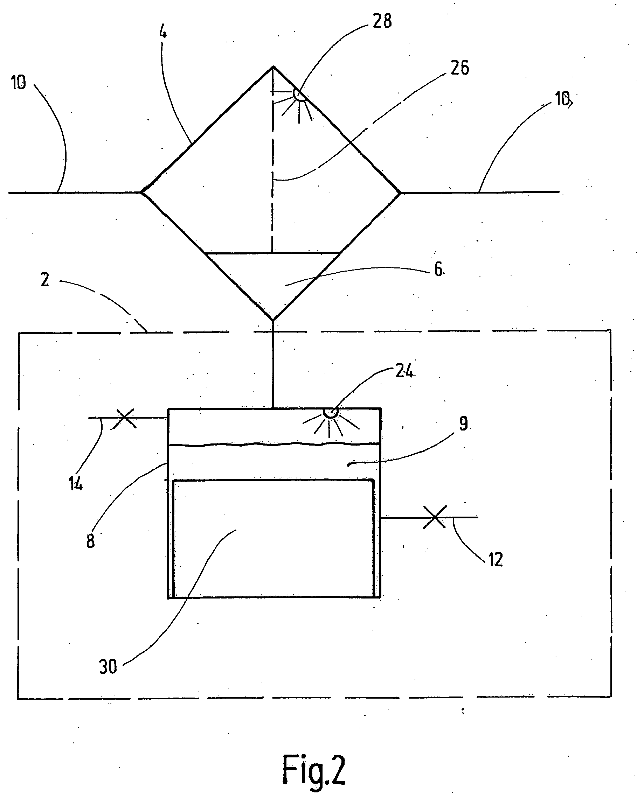

Bei beiden Ausführungsbeispielen von Fig. 1 und Fig. 2 erfolgt die Reinigung des aus der Kraftstofffilterung stammenden Wassers 6, 9 durch die Oxidation organischer Belastungsstoffe in der Weise, dass diese Stoffe in dem als Behandlungsraum dienenden Behälter 8 mit hochreaktiven Hydroxylradikalen in Kontakt gebracht werden. Bei beiden Ausführungsbeispielen sind die Hydroxylradikale mit Hilfe einer Auftrenneinrichtung aus den im Behälter 8 befindlichen Wassermolekülen abgespalten. Beim Ausführungsbeispiel von Fig. 1 erfolgt hierfür eine Wasserzersetzung durch Elektrolyse, die mittels zweier Diamantelektroden 16 und 18 durchgeführt wird. Während bei der Elektrolyse üblicherweise Wasser in Wasserstoff und Sauerstoff gespalten wird, liefert eine Diamantelektrode 16, 18 einen Arbeitsbereich, in dem anstelle von Sauerstoff hochaggressive Hydroxylradikale gebildet werden.

Die Diamantelektroden 16, 18 können in der Weise gebildet sein, dass bei sehr hohen Temperaturen zwischen 2000 °C und 3000 °C aus Wasserstoffgas und einem Kohlenwasserstoffgas, wie Methan, eine nur wenige Mikrometer dicke, kristalline Diamantschicht auf ein leitfähiges Substrat aufgebracht wird, wobei eine Dotierung mit dem Element Bor die Diamantschicht elektrisch leitfähig macht.

Wenn beim Ausführungsbeispiel von Fig. 1 beide Elektroden 16 und 18 Diamantelektroden sind, kann die Elektrolyse durch Anlegen einer Wechselspannung erfolgen, wobei entsprechend der Polumkehr jeweils die eine Elektrode 16 oder 18 anodisch und die andere Elektrode 16 oder 18 kathodisch wirksam ist. Alternativ kann die Anordnung so getroffen sein, dass lediglich eine der Elektroden, beim in Fig. 1 gezeigten Beispiel die Elektrode 16, eine Diamantelektrode ist und mit der Plusklemme 20 einer Gleichspannungsquelle verbunden ist. In diesem Falle ist die als Kathode wirksame, mit der Minusklemme 22 verbundene Elektrode 18 eine Edelstahlelektrode. Im Betrieb ergibt sich dadurch für die als Kathode wirkende Elektrode 18 ein kathodischer Schutz, entsprechend üblichen elektrochemischen Schutzverfahren für den Korrosionsschutz von Tanks oder Schiffen.

In jedem Fall ist durch das hohe Oxidationspotential der gebildeten Hydroxylradikale sichergestellt, dass die als Belastung im Wasser befindlichen organischen Substanzen zu unbedenklichen anorganischen Verbindungen oxidiert werden, insbesondere zu CO₂, das aus dem Behälter 8 entweicht. Das gereinigte Wasser kann sodann unbedenklich in die Umgebung abgegeben werden.

Fig. 2 zeigt ein Beispiel, bei dem anstelle einer als Elektrolysiereinrichtung ausgebildeten Auftrenneinrichtung eine chemische Auftrenneinrichtung benutzt wird, nämlich in der Weise, dass ein Titandioxid enthaltender, im Behälter 8 befindlicher Körper 30 mit dem zu reinigenden Wasser 9 in Kontakt gebracht wird. Die Kontaktierung mit Titandioxid führt zu einer Abspaltung von Hydroxylradikalen aus dem betreffenden Wasser 9. Wie gefunden wurde, lässt sich dieser chemische Mechanismus durch eine Zufuhr von Strahlungsenergie verstärken. Die Zufuhr von Strahlungsenergie kann durch eine künstliche oder natürliche Lichtquelle 24 erfolgen, die innerhalb des Behälters 8 den Behälterinhalt bestrahlt. Als besonders wirksam hat sich ein Wellenlängenbereich von 180 bis 300 nm erwiesen. Bei der Lichtquelle 24 kann es sich um Sonnenlicht, Lampen, wie LEDs, oder dergleichen handeln.

Bei beiden Ausführungsbeispielen von Fig. 1 und Fig. 2 kann auch vorgesehen sein, dass der Kraftstofffilter 4 mit einem Filtermedium 26 versehen ist, das eine Beschichtung mit Titandioxid aufweist, so dass bereits im Kraftstofffilter 4 eine Auftrenneinrichtung zur Abspaltung von Hydroxylradikalen aus dem Wasser 6 gebildet ist. Die dadurch erfolgende Reinigung kann die Wasserreinigung im Behälter 8 ersetzen oder zusätzlich hierzu als Vorreinigung vorgesehen sein. Wie bei der Auftrenneinrichtung innerhalb des Behälters 8 kann auch für die im Kraftstofffilter 4 gebildete Auftrenneinrichtung als Reaktionsverstärkereinrichtung eine Anordnung zur Zufuhr von Strahlungsenergie vorgesehen sein, beim vorliegenden Beispiel eine weitere Lichtquelle 28.

Die Erfindung ermöglicht eine wirksame Abreinigung mit einer einfach zu betreibenden Vorrichtung, die keinerlei Verbrauchsmaterialien benötigt, sondern lediglich eine Zufuhr elektrischer Energie zur Elektrolyse oder gegebenenfalls für Strahlungsquellen in Form der Lichtquellen 24, 28.

## Patentansprüche

1. Kraftstoffsystem mit einem Kraftstofffilter (4), **dadurch gekennzeichnet, dass** das Kraftstoffsystem eine Vorrichtung (2) zum Reinigen von Wasser (6, 9), das aus dem Kraftstofffilter (4) abgelassen oder aufgefangen ist und das mit organischen Inhaltsstoffen verunreinigt ist, aufweist, dass mittels einer Auftrenneinrichtung (8) aus dem Wasser (6, 9) Hydroxylradikale gebildet sind, die die Verunreinigungen, insbesondere organischen Inhaltsstoffe, weitestgehend aufoxidieren und in Verbindungen, wie CO₂, umwandeln, dass die Auftrenneinrichtung (8) eine Elektrolysiereinrichtung mit zwei Diamantelektroden (16, 18) aufweist, die, mit Polumkehr bestromt, abwechselnd als Anode und Kathode wirksam sind, und dass die Vorrichtung (2) einen dem betreffenden Kraftstofffilter (4) nachgeschalteten Behandlungsraum (8) für das zu reinigende Wasser (6, 9) aufweist, der einen steuerbaren Auslass (12) oder eine Fördervorrichtung oder einen Überlauf (14) für das gereinigte Wasser sowie die Auftrenneinrichtung (16, 18; 30) aufweist, um das im Behandlungsraum (8) befindliche Wasser (9) mit den gebildeten Hydroxylradikalen zu kontaktieren.

2. Kraftstoffsystem nach Anspruch 1, **dadurch gekennzeichnet, dass** die Auftrenneinrichtung Hydroxylradikale bildende Medien (30), wie Titandioxid, aufweist.

3. Kraftstoffsystem nach Anspruch 1 oder 2, **dadurch gekennzeichnet, dass** die Auftrenneinrichtung einen im Behandlungsraum (8) befindlichen Körper (30) aufweist, der Titandioxid enthält oder damit beschichtet ist und die das Wasser (9) kontaktierenden Hydroxylradikale bildet.

4. Kraftstoffsystem nach einem der vorstehenden Ansprüche, **dadurch gekennzeichnet, dass** die Auftrenneinrichtung, vorzugsweise zusätzlich zu dem im Behandlungsraum (8) befindlichen, Hydroxylradikale erzeugenden Einrichtungsteil (16, 18; 30), im zugeordneten Kraftstofffilter (4) ein mit Titandioxid versehenes Filtermedium (26) zur Bildung von Hydroxylradikalen aufweist.

5. Kraftstoffsystem nach einem der Ansprüche 1 bis 4, **dadurch gekennzeichnet, dass** die Auftrenneinrichtung zur Begünstigung der Bildung der Hydroxylradikale durch Titandioxid ein Mittel (24, 28) zur Zufuhr von Strahlungsenergie aufweist.

6. Kraftstoffsystem nach Anspruch 5, **dadurch gekennzeichnet, dass** eine Strahlungsquelle (24, 28) zur Bestrahlung des Behandlungsraumes (8) und/oder des Innenraumes des Kraftstofffilters (4) vorgesehen ist.

## Claims

1. A fuel system having a fuel filter (4), **characterised in that** the fuel system has a device (2) for purifying water (6, 9) which is drained or collected from the fuel filter (4) and which is contaminated with organic substances, that a separating means (8) forms hydroxyl radicals from the water (6, 9), which hydroxyl radicals oxidize the impurities, in particular organic substances, as far as possible and convert them into compounds such as CO₂, that the separating means (8) has an electrolysis device with two diamond electrodes (16, 18) which, energised with polarity reversal, act alternately as anode and cathode, and that the device (2) has a treatment chamber (8) downstream of the respective fuel filter (4) for the water (6, 9) which is to be purified, which chamber has a controllable outlet (12) or a conveyor device or an overflow (14) for the purified water and the separating means (16, 18;30) in order to make contact between the water (9) located in the treatment chamber (8) and the hydroxyl radicals which have been formed.

2. The fuel system according to Claim 1, **characterised in that** the separating means has media (30) forming hydroxyl radicals, such as titanium dioxide.

3. The fuel system according to Claim 1 or 2, **characterised in that** the separating means has a body (30) located within the treatment chamber (8) which contains titanium dioxide or is coated with the latter and forms the hydroxyl radicals which make contact with the water (9).

4. The fuel system according to any of the preceding claims, **characterised in that** the separating means, preferably in addition to the part (16, 18; 30) of the means which produces the hydroxyl radicals and which is located in the treatment chamber (8), has a filter medium (26) which is provided with titanium dioxide for the formation of hydroxyl radicals in the assigned fuel filter (4).

5. The fuel system according to any of Claims 1 to 4, **characterised in that** to promote the formation of hydroxyl radicals by titanium dioxide, the separating means has a means (24, 28) for the supply of radiant energy.

6. The fuel system according to Claim 5, **characterised in that** a radiation source (24, 28) is provided for irradiating the treatment chamber (8) and/or the interior of the fuel filter (4).

## Revendications

1. Système pour carburant, comprenant un filtre (4) à carburant, **caractérisé en ce que** le système à carburant a une installation (2) d'épuration de l'eau (6, 9), qui est évacuée du filtre (4) à carburant ou qui est y est captée et qui est polluée par des substances organiques, **en ce qu'**il est formé, au moyen d'un dispositif (8) de séparation, à partir de l'eau (6, 9) des radicaux hydroxyles, qui oxydent, dans une grande mesure, les impuretés, notamment les substances organiques et les transforment en composés, comme CO₂, **en ce que** le dispositif (8) de séparation a un dispositif d'électrolyse ayant deux électrodes (16, 18) en diamant, qui, alimentées en courant avec inversion de polarité, sont efficaces en alternance comme anode et comme cathode et **en ce que** l'installation (2) a un espace (8) de traitement de l'eau (6, 9) à épurer, en aval du filtre (4) à carburant concerné, de l'eau (6, 9) à épurer, espace qui a une sortie (12) pouvant être réglée ou un dispositif de transport ou un trop plein (14) pour l'eau épurée, ainsi que le dispositif (16, 18; 30) de séparation, afin de mettre en contact de l'eau (9) se trouvant dans l'espace (8) de traitement avec les radicaux hydroxyles formés.

2. Système à carburant suivant la revendication 1, **caractérisé en ce que** le dispositif de séparation a des milieux (30), comme du dioxyde de titane, formant des radicaux hydroxyles.

3. Système à carburant suivant la revendication 1 ou 2, **caractérisé en ce que** le dispositif de séparation a un corps (30), qui se trouve dans l'espace (8) de traitement, qui contient du dioxyde de titane ou qui en est revêtu, et qui forme les radicaux hydroxyles entrant en contact avec l'eau (9).

4. Système à carburant suivant l'une des revendications précédentes, **caractérisé en ce que** le dispositif de séparation a, de préférence, supplémentairement à la partie (16, 18; 30) de dispositif se trouvant dans l'espace (8) de traitement et produisant des radicaux hydroxyles, dans le filtre (4) à carburant associé, un milieu (26) filtrant pourvu de dioxyde de titane pour former des radicaux hydroxyles.

5. Système à carburant suivant l'une des revendications 1 à 4, **caractérisé en ce que** le dispositif de séparation a, pour favoriser la formation des radicaux hydroxyles par du dioxyde de titane, un moyen (24, 28) d'apport d'énergie de rayonnement.

6. Système à carburant suivant la revendication 5, **caractérisé en ce qu'**il est prévu une source (24, 28) de rayonnement pour rayonner dans l'espace (8) de traitement et/ou dans l'espace intérieur du filtre (4) à carburant.
